(19)

Europäisches
Patentamt
European
Patent Office
Office européen
des brevets

(11) **EP 4 250 133 A1**

(12) **EUROPEAN PATENT APPLICATION**

(43) Date of publication:
**27.09.2023 Bulletin 2023/39**

(21) Application number: **23158165.3**

(22) Date of filing: **23.02.2023**

(51) International Patent Classification (IPC):
**G06F 16/383** $^{(2019.01)}$    **G06F 16/35** $^{(2019.01)}$

(52) Cooperative Patent Classification (CPC):
**G06F 16/353; G06F 16/383**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2022 IN 202221015893**

(71) Applicant: **Tata Consultancy Services Limited
Maharashtra (IN)**

(72) Inventors:
 • **PATIL, SANGAMESHWAR SURYAKANT
 411013 Pune, Maharashtra (IN)**

 • **RAMRAKHIYANI, NITIN VIJAYKUMAR
 411013 Pune, Maharashtra (IN)**
 • **HINGMIRE, SWAPNIL VISHVESHWAR
 411013 Pune, Maharashtra (IN)**
 • **KUMAR, ALOK
 411013 Pune, Maharashtra (IN)**
 • **BEDI, HARSIMRAN
 411013 Pune, Maharashtra (IN)**
 • **JELLA, MANIDEEP
 500081 Hyderabad, Telangana (IN)**
 • **PALSHIKAR, GIRISH KESHAV
 411013 Pune, Maharashtra (IN)**

(74) Representative: **Goddar, Heinz J.
 Boehmert & Boehmert
 Anwaltspartnerschaft mbB
 Pettenkoferstrasse 22
 80336 München (DE)**

(54) **SYSTEMS AND METHODS FOR SIMILARITY ANALYSIS IN INCIDENT REPORTS USING EVENT TIMELINE REPRESENTATIONS**

(57)    This disclosure relates to the field of incident analysis, and, more particularly, to systems and methods for similarity analysis in incident reports using event timeline representations. Conventionally, processing of repositories of incident reports to identify similar incidents is challenging due to use of unstructured text data in describing the incident reports. Timeline representation is an important knowledge representation which captures chronological ordering of the events. The timeline representation becomes useful in process of root cause analysis as causes would temporally precede the effect. To construct event timeline representations, chronological ordering of events is required. The present disclosure provides a temporal relation identification technique to obtain a timeline representation of the events. Further, a similarity identification approach is used that makes use of neural embeddings to identify similar timeline representations and in turn, similar incident reports. The similar incident reports help to devise best practices to provide better post-incident remedial measures.

Receiving, via one or more hardware processors, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation — 202

Generating, a timeline representation of the plurality of events comprised in the plurality of sentences of (i) the one or more incident reports and (ii) the incoming query incident report using a temporal relation identification technique, wherein the temporal relation identification technique comprising: classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and determining, a time order of the plurality of events in each of the plurality of time ordered sentences based on one or more temporal markers — 204

Determining, a similarity measure between the incoming query incident report and the one or more incident reports from the repository of incident reports stored in the system database using a similarity identification approach that utilizes the generated timeline representation of the plurality of events — 206

dynamically updating, the system database by storing the timeline representation and corresponding similarity measure of the plurality of events comprised in the plurality of sentences of the one or more incident reports and the incoming query incident report — 208

200

**FIG. 2**

EP 4 250 133 A1

**Description**

CROSS-REFERENCE TO RELATED APPLICATIONS AND PRIORITY

The present application claims priority from Indian patent application, Application No. 202221015893, filed in India on March 22, 2022.

TECHNICAL FIELD

The disclosure herein generally relates to the field of incident analysis, and, more particularly, to systems and methods for similarity analysis in incident reports using event timeline representations.

BACKGROUND

Industrial incidents, even though highly undesirable, are an unavoidable reality. These could be industrial safety incidents or incidents related to cybersecurity. It is observed that cost of the industrial incidents runs into multiple billion dollars per annum. More importantly, there is irreparable human cost due to fatalities and major injuries such as permanent disabilities. In cybersecurity incidents, there may be loss of sensitive data as well as reputation of an organization which impacts business of organizations. In most cases, incident reports summarizing the incidents as well as their investigation are maintained in incident document repositories. Enterprises, regulatory bodies as well as standards committees spend extensive efforts to analyze incidents, identify root causes, and suggest preventive actions for recurrence and conduct trainings. Conventionally, multiple representations and frameworks such as the 24Model, Fishbone diagram, the event sequence diagram are used to represent, visualize and analyze incidents, but they are carried out with manual analysis.
While a few conventional approaches provide processing of an incident report which can be useful for populating knowledge representations, analyzing repositories of such incident reports and identifying useful insights, best practices, remedial measures, precautionary steps, on a large scale efficiently, remains challenging. Also, existing systems for analyzing the incident reports do not focus on identifying similar incidents. Further, due to unstructured text data used to describe the incident reports, it is very challenging to identify similar incident reports.

SUMMARY

Embodiments of the present disclosure present technological improvements as solutions to one or more of the above-mentioned technical problems recognized by the inventors in conventional systems. For example, in one embodiment, a processor implemented method is provided. The method comprising receiving, via one or more hardware processors, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation; generating, via the one or more hardware processors, a timeline representation of the plurality of events comprised in the plurality of sentences of (i) the one or more incident reports and (ii) the incoming query incident report using a temporal relation identification technique, wherein the temporal relation identification technique comprising: classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and determining, a time order of the plurality of events in each of the plurality of time ordered sentences based on one or more temporal markers; determining, via the one or more hardware processors, a similarity measure between the incoming query incident report and the one or more incident reports from the repository of incident reports stored in the system database using a similarity identification approach that utilizes the generated timeline representation of the plurality of events, wherein the similarity identification approach comprising: obtaining, a first set of incidents reports from the one or more incident reports from the repository of incident reports stored in the system database, wherein the first set of incident reports having a textual content based similarity with the incoming query incident report based on an indexing method; identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report; determining, using an approximate matching technique, a similarity score for each component of the set of similar events between each of the first set of incident reports and the incoming query incident report; and identifying, based on the similarity score, a longest sequence of similar components of the set of similar events between each of the first set of incident reports and the incoming query incident report; and dynamically updating, via the one or more hardware processors, the system database by storing the timeline representation and corresponding similarity measure of the plurality of events comprised in the plurality of sentences of the one or more incident reports and the incoming query incident report.

In another aspect, a system is provided. The system comprising a memory storing instructions; one or more communication interfaces; and one or more hardware processors coupled to the memory via the one or more communication interfaces, wherein the one or more hardware processors are configured by the instructions to receive, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation; generate, a timeline representation of the plurality of events comprised in the plurality of sentences of (i) the one or more incident reports and (ii) the incoming query incident report using a temporal relation identification technique, wherein the temporal relation identification technique comprising: classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and determining, a time order of the plurality of events in each of the plurality of time ordered sentences based on one or more temporal markers; determine, a similarity measure between the incoming query incident report and the one or more incident reports from the repository of incident reports stored in the system database using a similarity identification approach that utilizes the generated timeline representation of the plurality of events, wherein the similarity identification approach comprising: obtaining, a first set of incidents reports from the one or more incident reports from the repository of incident reports stored in the system database, wherein the first set of incident reports having a textual content based similarity with the incoming query incident report based on an indexing method; identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report; determining, using an approximate matching technique, a similarity score for each component of the set of similar events between each of the first set of incident reports and the incoming query incident report; and identifying, based on the similarity score, a longest sequence of similar components of the set of similar events between each of the first set of incident reports and the incoming query incident report; and dynamically update, the system database by storing the timeline representation and corresponding similarity measure of the plurality of events comprised in the plurality of sentences of the one or more incident reports and the incoming query incident report.

In yet another aspect, a non-transitory computer readable medium is provided. The non-transitory computer readable medium comprising receiving, via one or more hardware processors, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation; generating, via the one or more hardware processors, a timeline representation of the plurality of events comprised in the plurality of sentences of (i) the one or more incident reports and (ii) the incoming query incident report using a temporal relation identification technique, wherein the temporal relation identification technique comprising: classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and determining, a time order of the plurality of events in each of the plurality of time ordered sentences based on one or more temporal markers; determining, via the one or more hardware processors, a similarity measure between the incoming query incident report and the one or more incident reports from the repository of incident reports stored in the system database using a similarity identification approach that utilizes the generated timeline representation of the plurality of events, wherein the similarity identification approach comprising: obtaining, a first set of incidents reports from the one or more incident reports from the repository of incident reports stored in the system database, wherein the first set of incident reports having a textual content based similarity with the incoming query incident report based on an indexing method; identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report; determining, using an approximate matching technique, a similarity score for each component of the set of similar events between each of the first set of incident reports and the incoming query incident report; and identifying, based on the similarity score, a longest sequence of similar components of the set of similar events between each of the first set of incident reports and the incoming query incident report; and dynamically updating, via the one or more hardware processors, the system database by storing the timeline representation and corresponding similarity measure of the plurality of events comprised in the plurality of sentences of the one or more incident reports and the incoming query incident report.

In accordance with an embodiment of the present disclosure, the incoming query incident report is different from the one or more incident reports from the repository of incident reports stored in the system database.

In accordance with an embodiment of the present disclosure, the timeline representation is indicative of chronological ordering of the plurality of events.

In accordance with an embodiment of the present disclosure, the set of similar events is a subset of the timeline representation of a plurality of events comprised in each of the first set of incident reports and a plurality of events comprised in the incoming query incident report.

In accordance with an embodiment of the present disclosure, the one or more similarity parameters include one or more linguistic constraints, one or more word embedding constraints, and one or more sentence representations.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for similarity analysis in incident reports using event timeline representations according to some embodiments of the present disclosure.

FIG. 2 illustrates an exemplary flow diagram illustrating a method for similarity analysis in incident reports using event timeline representations in accordance with some embodiments of the present disclosure.

FIG. 3 is a functional block diagram of an architecture of a deep learning based neural network based classifier according to some embodiments of the present disclosure.

FIG. 4 shows an example illustrating the process of intra sentence ordering for a given text according to some embodiments of the present disclosure.

FIG. 5 shows an example of a timeline representation of the plurality of events comprised in the plurality of sentences of a sample incident report generated as output according to some embodiments of the present disclosure.

FIGS. 6A through 6E depict event timeline representations illustrating a working example of the method of the present disclosure using an incoming query incident and a plurality of matching events, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Industrial incidents, even though highly undesirable, are an unavoidable reality. These could be industrial safety incidents or incidents related to cybersecurity. It is observed that cost of the industrial incidents runs into multiple billion dollars per annum. More importantly, there is irreparable human cost due to fatalities and major injuries such as permanent disabilities. In cybersecurity incidents, there may be loss of sensitive data as well as reputation of an organization which impacts business of organizations. In most cases, incident reports summarizing the incidents as well as their investigation are maintained in incident document repositories. Enterprises, regulatory bodies as well as standards committees spend extensive efforts to analyze incidents, identify root causes, suggest preventive actions for recurrence and conduct trainings. Conventionally, multiple representations and frameworks such as the 24Model, Fishbone diagram, the event sequence diagram are used to represent, visualize and analyze incidents, but they are carried out with manual analysis.

Although few conventional approaches provide processing of an incident report which can be useful for populating knowledge representations, but analyzing repositories of such incident reports and identifying useful insights, best practices, remedial measures, precautionary steps, on a large scale efficiently, remains challenging. Also, existing systems for analyzing the incident reports do not focus on identifying similar incidents. Further, unstructured text data is used to describe the incident reports. These challenges make it difficult for conventional approaches to be employed for identifying similar incident reports.

The present disclosure addresses unresolved problems of identifying similar events by automated analysis of a repository of incident reports using event timeline representations. Embodiments of the present disclosure provide systems and methods for similarity analysis in incident reports using event timeline representations. Timeline representation is an important knowledge representation which capture chronological ordering of the events. A timeline representation becomes useful in the process of root cause analysis as causes would temporally precede the effect (the incident in this case). To construct event timeline representations, chronological ordering of the events is required. The present disclosure provides a temporal relation identification technique to obtain a timeline representation of the events. Further, a similarity identification approach is used that makes use of neural embeddings to identify similar timeline representations and in turn, similar incident reports. More specifically, the present discourse provides:

1. Generation of event timeline representations using temporal relation identification technique
2. Similarity analysis in incident reports using the generated event timeline representations.

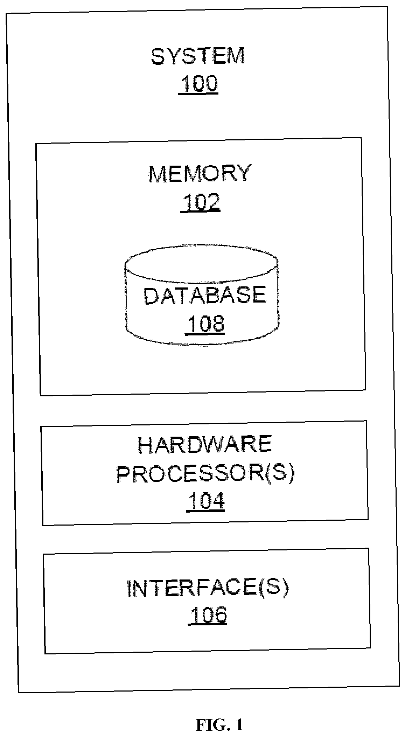

Referring now to the drawings, and more particularly to FIGS. 1 through 6E, where similar reference characters denote corresponding features consistently throughout the figures, there are shown preferred embodiments and these embodiments are described in the context of the following exemplary system and/or method.

FIG. 1 illustrates an exemplary system 100 for similarity analysis in incident reports using event timeline representations according to some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W 5 and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a system database 108 is comprised in the memory 102, wherein the system database 108 comprises one or more incident reports from a repository of incident reports, and timeline representation of events in the one or more incident reports. The database 108 further stores information on the scene in the environment. In an embodiment, the system database is dynamically updated

The system database 108 further comprises one or more networks such as one or more neural network(s) including deep learning based neural network classifier which when invoked and executed perform corresponding steps/actions as per the requirement by the system 100 to perform the methodologies described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

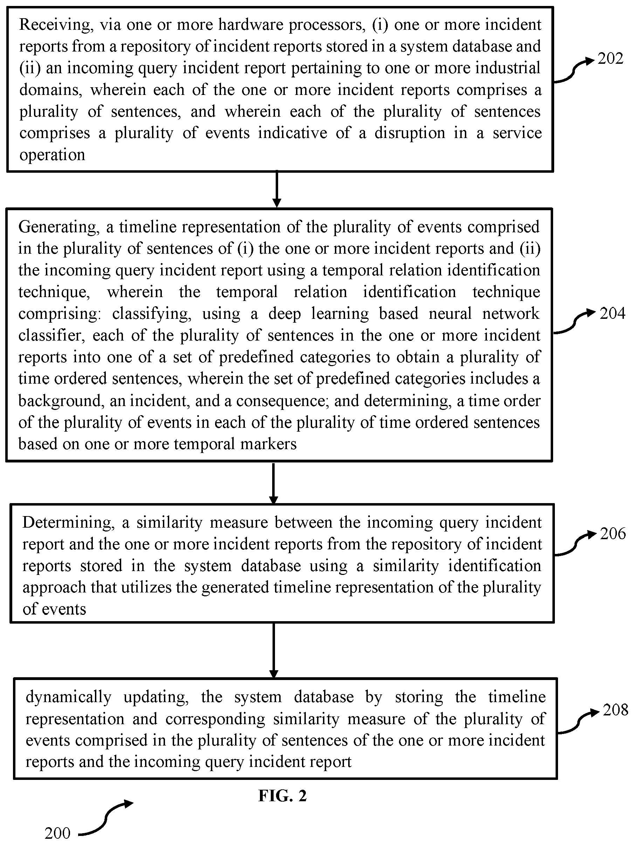

FIG. 2, with reference to FIG. 1, depicts an exemplary flow diagram illustrating a method 200 for similarity analysis in incident reports using event timeline representations, using the system 100 of FIG. 1, in accordance with an embodiment of the present disclosure.

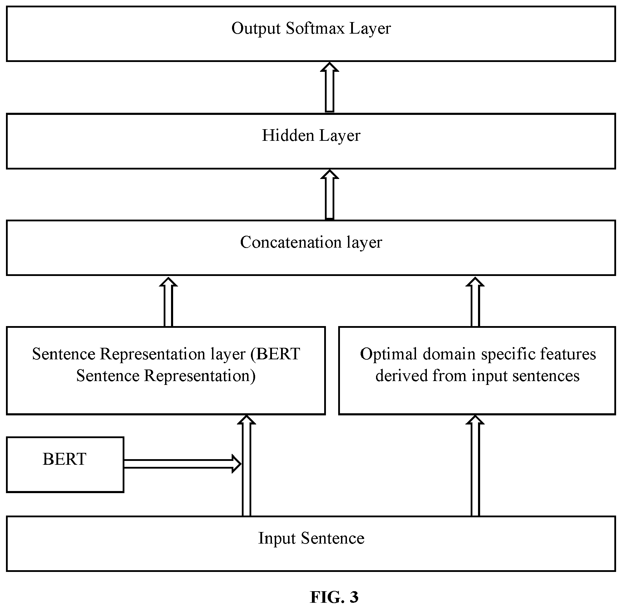

Referring to FIG. 2, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, the block diagram of FIG. 3 and one or more illustrative examples. In an embodiment, at step 202 of the present disclosure, the one or more hardware processors 104 are configured to receive one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in service operation. In an embodiment, the industrial domains may include but not limited to cybersecurity, aviation, construction, mining, and/or the like. In an embodiment, the incoming query incident report is different from the one or more incident reports from the repository of incident reports stored in the system database.

In an embodiment, at step 204 of the present disclosure, the one or more hardware processors 104 are configured to generate, a timeline representation of the plurality of events comprised in the plurality of sentences of (i) the one or more incident reports and (ii) the incoming query incident report using a temporal relation identification technique. In an embodiment, the temporal relation identification technique comprising classifying, each of the plurality of sentences in the one or more incident reports into one of a set of predefined categories using a deep learning based neural network classifier to obtain a plurality of time ordered sentences. In an embodiment, the set of predefined categories includes a background, an incident, and a consequence; and determining, a time order of the plurality of events in each of the plurality of time ordered sentences based on one or more temporal markers. In an embodiment, the one or more temporal markers may include but not limited to temporal cues occurring as lexical markers such as after, before, when, and/or the like. In an embodiment, the timeline representation is indicative of chronological ordering of the plurality of events.

The steps 202 and 204 are better understood by way of the following description provided as exemplary explanation.

An incident occurs under some circumstances and would comprise of a series of undesirable events, finally ending with some aftermath either serious (i.e., involving injury or death or instrument damage) or mild. A sentence in the incident report gives information on one of the three aspects of the incident: pre-incident background circumstances (referred to as BACKGROUND), description of the incident (referred to as INCIDENT) and a post-incident aftermath (referred to as CONSEQUENCES). Table 1 below provides two examples of sample incident reports.

Table 1

| Sample incident #1: On February 1, 2014, at approximately 11:37 a.m., a 340 ft.-high guyed telecommunication tower, suddenly collapsed during upgrading activities. Four employees were working on the tower removing its diagonals. In the process, no temporary supports were installed. As a result of the tower 's collapse, two employees were killed and two others were badly injured. |
| --- |
| Sample incident #2: On March 25, 2014, two communication towers owned by Union Pacific Railroad collapsed in Blaine, KS, killing two workers. One employee was engaged in disconnecting the 10 ft. diameter dish and another employee was on the same tower approximately 80 ft. from the top. One worker died at the scene and the other was pronounced dead at the hospital. |

Sample incident #1 report from Table 1 is shown with each sentence marked with the corresponding aspect in below Table 2. As can be seen in Table 1 and Table 2, the first sentence which mentions the collapse of the communication tower is describing the incident. The next two sentences, however, give a description of events that were in progress just before the collapse such as the ongoing removal of the diagonals. The final sentence describes the aftermath involving death and injury to the employees.

Table 2

| INCIDENT: On February 1, 2014, at approximately 11:37 a.m., a 340 ft.-high guyed telecommunication tower, suddenly collapsed during upgrading activities. BACKGROUND: Four employees were working on the tower removing its diagonals. BACKGROUND: In the process, no temporary supports were installed. |
| --- |
| CONSEQUENCES: As a result of the tower's collapse, two employees were killed and two others were badly injured. |

Thus, while recording the incident, the incident report could be prepared to formulate a sentence to encode information about one or more of the three aspects - BACKGROUND, INCIDENT and CONSEQUENCES. However, to describe the incident, these aspects (i.e., the corresponding sentences) may not appear chronologically in textual content of the incident report.

The method of the present disclosure provides a temporal relation identification technique for temporal ordering of events (alternately referred to as 'event temporal ordering') that makes use of this observation. The task of event temporal ordering is divided into two steps: inter-sentence ordering and intra-sentence ordering. In the inter-sentence ordering step, each sentence in the incident reports is classified in one of the three aspects- BACKGROUND, INCIDENT and CONSEQUENCES. A deep learning based neural network classifier is used to perform the classification of each sentence to its corresponding aspect. As output of this step, a list of sentences ordered temporally is obtained by placing the BACKGROUND aspect sentences first, followed by the INCIDENT aspect sentences and then the CONSEQUENCES aspect sentences.

FIG. 3, with reference to FIGS. 1-2, depicts a functional block diagram of an architecture of the deep learning based neural network classifier as implemented by the system of 100 of FIG. 1, in accordance with an embodiment of the present disclosure. As shown in FIG. 3, the architecture of the deep learning based neural network classifier comprises of:

1. A sentence representation layer: This layer converts every sentence into a vector representation by passing the sentence through a pre-trained BERT-Base model and considering the output CLS representation. Also, domain-specific features could be derived from input sentence and concatenate with the BERT CLS representation using a concatenation layer as shown in FIG. 3.
2. Hidden layer: This layer reduces input high-dimensional BERT representation to a smaller dimension, followed by a dropout layer for regularization.
3. Output layer: This layer is a softmax activation layer for the three classes output classification.

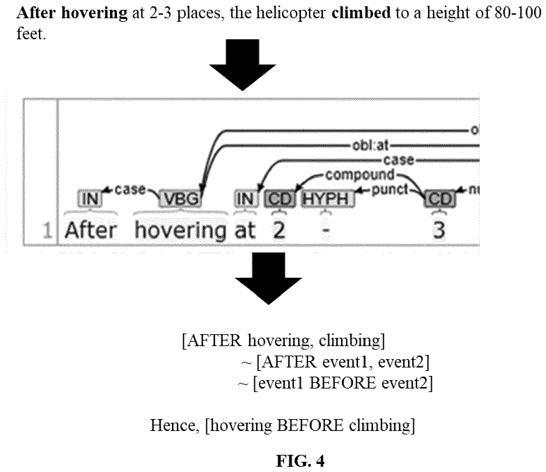

In an embodiment, once the sentences are classified into these ordered sentence pre-defined categories (i.e., BACKGROUND, INCIDENT, CONSEQUENCE categories), the plurality of events inside each sentence need to be ordered which is carried out as part of the intra-sentence ordering step. In order to achieve the classification of the events, the method of present disclosure harnesses few temporal cues occurring as lexical markers (say, after, before, when) to place intra-sentence events in correct order. The process of intra-sentence ordering involves checking a presence of temporal cues or lexical markers on lowest common ancestor path between the plurality of events and checking their occurrence with respect to a first event in a pair. In an embodiment, events are generally expressed in natural language as verbs. However, there are some events which are expressed as nouns such as attack, acquisition, and/or the like. The events expressed as nouns are known as nominal events. In the present disclosure, the nominal events are also handled by establishing a simultaneous relation with their dependency parent verbs which are verb-based events. FIG. 4 shows an example illustrating the process of intra sentence ordering for a given text according to some embodiments of the present disclosure. The given text is '*After hovering at 2-3 places, the helicopter climbed to a height of 80-100 feet*.' As can be seen in FIG. 4, for the given text, the temporal marker After is used to identify that event 1 which is hovering comes before event 2 which is climbing.

The entire process of intra sentence event ordering can be further better understood by way of following pseudo code provided as example:

**Input:** A set of events $E$ for a sentence $S$, a set of Part of Speech (POS) tags $P$ for sentence $S$ and a set of dependency relations $D$ for sentence $S$

**Result:** Temporally ordered list of the input events $OE\_LIST$

$OE\_LIST := array(0 \ldots . |E|)$

$order\_number = 1$

**for** $i$ in $0 \ldots . |E| - 1$ **do**

    **for** $j$ in $0 \ldots . |E|$ **do**

        **if** $P[i] =' NOUN'$ and $P[j] = 'VERB'$ and $i$ in $D[j]['children']$ and $D[i][j]['relation']$ in $['nsubj',' nsubjpass']$ **then**

            // 'SIMULTANEOUS' relation when nominal event is subject of verb-based event

            $OE\_LIST[order\_number].add(i);$

            $OE\_LIST[order\_number].add(j);$

            $order\_number := order\_number + 1;$

        **else if** $P[i] =' VERB'$ and $P[j] = 'NOUN'$ and $j$ in $D[i]['children']$ and $D[i][j]['relation']$ in $['dobj',' nmod{:}* ']$ **then**

            // 'SIMULTANEOUS' relation when nominal event is object of verb-based event

            $OE\_LIST[order\_number].add(i);$

            $OE\_LIST[order\_number].add(j);$

            $order\_number := order\_number + 1;$

        **else**

            $lca\_path = comput\_lowest\_common\_ancestor\ (i, j)$

            **for** $k$ in $lca\_path$ **do**

              $lca\_path\_token = S[k]$

              **if** $lca\_path\_token == 'after'$ and $i < k$ **then**

                // event 1 happened after event 2

**EP 4 250 133 A1**

$$OE\_LIST[order\_number].add(j);$$

$$order\_number := order\_number + 1;$$

$$OE\_LIST[order\_number].add(i);$$

**else if** $lca\_path\_token == \text{'}after\text{'}$ and $k < i$ **then**

// after event 1, event 2 happened

$$OE\_LIST[order\_number].add(i);$$

$$order\_number := order\_number + 1;$$

$$OE\_LIST[order\_number].add(j);$$

// The above check is made for multiple temporal markers such

as 'before', 'while', 'when', 'during', 'at the same time' and

appropriate relations are established.

**return** $OE\_LIST$;

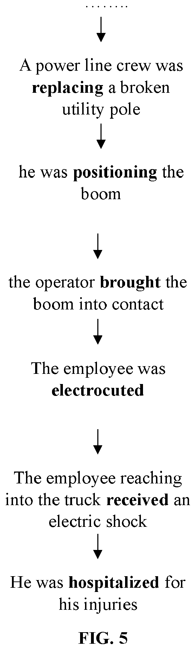

FIG. 5 shows an example of a timeline representation of the plurality of events comprised in the plurality of sentences of a sample incident report generated as output according to some embodiments of the present disclosure. Text comprised in the sample incident report of FIG. 5 is shown below:

'A power line crew was replacing a broken utility pole. One of the employees on the crew was standing on the side of the digger derrick holding onto the side of the truck with both hands. A second employee was reaching into the cab of the truck with his right knee touching the running board. The ground was wet from a rain and ice storm. As he was positioning the boom of the derrick the operator brought the boom into contact with a 13.2-kilovolt overhead power line. The employee at the side of the truck was electrocuted. The employee reaching into the truck received an electric shock and burns on his knee and foot. He was hospitalized for his injuries. '

In an embodiment, at step 206 of the present disclosure, the one or more hardware processors 104 are configured to determine a similarity measure between the incoming query incident report and the one or more incident reports from the repository of incident reports stored in the system database using a similarity identification approach that utilizes the generated timeline representation of the plurality of events. In an embodiment, the similarity identification approach could be alternatively referred as event timeline representations based similarity identification approach. Identifying incidents with similar causes or similar consequences or both can help in devising strategies to curb incidents and better post-incident remedial measures. However, to derive such minute observations, simple inverted index and query based search of similar incidents do not suffice. In addition to index based searching, finding similar event timelines help in establishing and observing fine-grained facets of incident similarity. However, task of finding similar timelines is not straightforward even for human experts owing to complex nature of the timeline representations. To obtain a quantitative measure of similarity between two event timeline representations, an objective definition of the similarity is required to be devised which should allow for an ordinal grading instead of a binary similar/not-similar selection. The classification of sentences into the set of predefined categories (i.e., Background, Incidents, Consequences) become defining dimensions if a comparison needs to be carried out between any two incidents. Similar backgrounds may indicate similar prevalent conditions and possibly causes. Similar incident descriptions may indicate similar series of failure events. More interestingly, similar incident descriptions but dissimilar backgrounds may indicate scenarios with different causes but similar incidents. Similarly, more such scenarios can be deciphered. More specifically, the method of the present disclosure performs similarity analysis in light of following points:

a. Each event in the timeline can be part of one of three aspects - BACKGROUND, INCIDENT And CONSEQUENCES. Hence, each aspect would be formed of a smaller timeline of events.
b. Given two timelines, a comparison of the corresponding aspect event timelines can be made. This is a much comprehensible task than comparing the complete timelines at once.
c. In the context of similarity, a sense of importance among these aspects also needs to be considered. For example, the CONSEQUENCES timelines may be highly similar but the other two aspect timelines may be entirely different. However, this may not necessarily result in a high similarity between the two timelines as consequences (such as injury or artifact damage) are frequently similar but incident descriptions or causes may not be.

9

d. A higher similarity in the pre-conditions, causes, background or in the incident description would award a higher similarity score with an even higher score if the CONSEQUENCES are also similar. On the other hand, a lower similarity in the pre-conditions, causes, background or in the incident description would award a lower similarity score, even if the CONSEQUENCES are similar.

In an embodiment, the similarity identification approach, at first step, obtain, a first set of incidents reports from the one or more incident reports from the repository of incident reports stored in the system database. Here the first set of incidents reports refer to the incident reports having a textual content based similarity with the incoming query incident report based on an indexing method. In an embodiment, the first set of incidents are indicative of a set of k most similar incidents (alternatively referred as matching incidents). In other words, the method of the present disclosure finds similar incidents through a combination of (a) an inverted index based similarity, and (b) similarity in event timelines of the incidents. As the first step, an inverted index on a corpus of incidents and an incoming query incident is built. Further, the inverted index is queried to retrieve the set of k most similar incidents. A standard Information Retrieval (IR) pipeline of stop word removal and lemmatization is used for both corpus documents and the incoming query incident while creating and querying the inverted index respectively.

Further, at second step of the similarity identification approach, a set of similar events between each of the first set of incident reports and the incoming query incident report is identified by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report. In an embodiment, the verbatim match between two events refers to a match when two events are exactly same. For example, the events "*The employee received an electric shock*" and "*The employee received an electric shock*" are exactly matching. However, this is restrictive and the present disclosure allows for calling events as similar even if they are paraphrases of each other. For example, the events "*The employee received an electric shock*" and "*The worker got a shock due to electricity*" are considered as matching despite of having no exact match.

In an embodiment, the set of similar events is a subset of the timeline representation of a plurality of events comprised in each of the first set of incident reports and a plurality of events comprised in the incoming query incident report. In an embodiment, the one or more similarity parameters include one or more linguistic constraints, one or more word embedding constraints, and one or more sentence representations.

In other words, as the second step, an unsupervised timeline similarity matching is performed on the k most similar incidents obtained from the first step. The modified dynamic programming based approach is used to identify the longest sequence of similar events by unifying different sources of assessing similarity between events, namely, linguistic constraints, static word embeddings such as GloVe, and transformer based sentence representations such as SentBERT. In the context of the present disclosure, an event is defined as a four-tuple ($e, A_0, A_1, E_L$) which includes an event phrase e, argument $A_0$, argument $A_1$ and complete event label $E_L$. Arguments $A_0$ and $A_1$ represent semantic roles of an event, such that $A_0$ represents an agent, doer or initiator of the event and $A_1$ represents patient, the undergoer or affected entity of the event. The complete event label $E_L$ of an event is obtained by combining the event phrase e, argument $A_0$ and argument $A_1$ using syntactic dependencies. At first, a similarity between two events is determined and further the similarity between sequences within the similar events that are obtained based on event level mapping is determined. The similarity between two events is assessed based on the following similarity parameters:

1. Sentence representations: Two events are similar if cosine similarity between their SentBERT based sentence representations of the complete event labels is high. For example, complete event labels "*the worker was electrocuted*" and "*the employee received an electric shock*" discuss similar events without sharing words.
2. Static word embeddings:

    a. Similar events should have high cosine similarity between their respective word embeddings.
    b. Two events are similar to each other if there is high static word embeddings similarity for both event phrases and entities at their respective semantic roles (*such as $A_0$ or $A_1$* ). For example, in the events "*the worker got an electric shock*" and "*the employee got an electric shock*", patient of the event "*got*" in both the sequences have high word embeddings based similarity, hence both the events are similar to each other.

3. Linguistic constraints:

    a. Similar events should show negation compatibility. For example, the events "*the employee did not get an electric shock*" and "*the employee got an electric shock*" are not similar even though their event phrases (got/get) are same.
    b. If two events are antonyms of each other they should not be considered similar. However, if the two events are antonyms but have opposite negation compatibility, then the events are likely to be similar. For example, the events, "*the worker failed to open the valve* " and "*the employee did not succeed in opening the valve* " are similar to each other

c. If two events are similar then their respective particles/post-positions should be compatible to each other. For example, in the events "*at the time of the incident he was climbing up the stairs* " and "*at the time of the incident he was climbing down the stairs*" particles (up and down) associated with the event phrases climbing are opposite and non-compatible, and hence the events are not similar even though rest of the words in the events are same.

Further, at third step of the similarity identification approach, a similarity score is determined for each component of the set of similar events between each of the first set of incident reports and the incoming query incident report using an approximate matching technique. At fourth step, a longest sequence of similar components of the set of similar events between each of the first set of incident reports and the incoming query incident report is identified based on the similarity score. This means that after measuring similarity between events, the *longest sequence* of similar events is identified. In the present disclosure, suppose two event timeline representation are shown as sequences of their corresponding events. Let $E_1 = <e_{11}, e_{12}, e_{13}, ...., e_{1m}>$ and $E_2 = <e_{21}, e_{22}, e_{23}, ...., e_{2n}>$ be two event sequences. Then, instead of comparing every event in $E_1$ with every event in $E_2$ through a brute-force approach, the longest non-contiguous similar sequence of events by computing this similarity recursively for a subset of events of two timelines. In an embodiment, the longest sequence could be non-contiguous and contiguous. For simplifying the explanation, the longest non-contiguous sequence is used in the present disclosure. In the present disclosure, an approximate matching process is devised based on the one or more similarity parameters such as the one or more linguistic constraints, the one or more word embedding constraints such as GloVe, and the one or more sentence representations such as SentBERT. Let $C[m,n]$ represents length of the longest subsequence of $E_1$ and $E_2$. Here, $C[m,n]$ can be computed based on $C[i,j]$ such that $i < m$ and $j < n$ as shown in equation (1) below:

$$C[i,j] = \begin{cases} 0 & if\ i = 0\ or\ j = 0 \\ C[i-1, j-1] + 1 & if\ event\_similarity(e_{1i}, e_{2j}) = 1 \\ max(C[i, j-1], C[i-1, j]) & otherwise \end{cases} (1)$$

After computing values in $C_{mxn}$, the longest non-contiguous sequence of similar events can be obtained by parsing the matching points in $C_{mxn}$.

The entire similarity identification approach can be further better understood by way of following pseudo code provided as example:

**Input:** Event details: event1_details, event2_details

$\tau_1$= event phrase similarity threshold

$\tau_2$= event argument similarity threshold

$\varphi_{upper}$= upper bound threshold for SentBERT based similarity

$\varphi_{lower}$= lower bound threshold for SentBERT based similarity

antonym_list = pairs of words with antonym relations

**Result:** Similarity score

$A_0\_1$ = event1_details[arg0]

$e_v\_1$ = event1_details[event]

$A_1\_1$ = event1_details[arg1]

$E_L\_1$ = event1_details[event_label]

dependencies_$e_v\_1$ = event1_details[dependency_relations];

Similarly obtain $A_0\_2$, $e_v\_2$, $A_1\_2$, $E_L\_2$ and dependencies_$e_v\_2$;

events_sim = 0.0;

events_sim_computed = False;

// Computation of events_sim is a complex process based on three phases

// Phase 1: Checking SentBERT based similarity

Sentbert_similarity = SentBERT_similarity($E_{L_1}, E_{L_2}$ );

**if** *Sentbert_similarity* $> \varphi_{upper}$ **then**

    events_sim = 1.0;

    events_sim_computed = True;

**else if** $Sentbert_{similarity} < \varphi_{Lower}$ **then**

    events_sim = 0.0;

    events_sim_computed = True;

// Phase 2: Applying linguistic constraints

**if** $events\_sim\_computed$ is $False$ **then**

    is_event1_negated = check_for_negation(dependencies_$e_v$_1);

    event1_particle = check_for_particle(dependencies_$e_v$_1);

    is_event2_negated = check_for_negation(dependencies_$e_v$_2);

    event2_particle = check_for_particle(dependencies_$e_v$_2);

    **if** $is\_event1\_negated$ and not $is\_event2\_negated$ and $antonym(e_v\_1, e_v\_2)$ is $True$ **then**

        events_sim = 1.0;

        events_sim_computed = True;

    **else if** $is\_event2\_negated$ and not $is\_event1\_negated$ and $antonym(e_v\_1, e_v\_2)$ is $True$ **then**

        events_sim = 1.0;

        events_sim_computed = True;

    **else if** $is\_event1\_negated$ and $is\_event2\_negated$ and $antonym(e_v\_1, e_v\_2)$ is $True$ **then**

        events_sim = 0.0;

        events_sim_computed = True;

    **else if** $event1\_particle\ != event2\_particle$ **then**

        events_sim = 0.0;

        events_sim_computed = True;

// Phase 3: word similarity based on glove embeddings

events_sim=0.0;

**if** $events\_sim\_computed$ is $False$ **then**

    $e_v$_similarity = glove_based_similarity($e_v\_1, e_v\_2$) ;

$$arg0\_sim = \text{glove\_based\_similarity}(A_0\_1, A_0\_2);$$

$$arg1\_sim = \text{glove\_based\_similarity}(A_1\_1, A_1\_2);$$

$$\textbf{if } arg0\_sim \geq \tau_1 \text{ and } arg1\_sim \geq \tau_2 \textbf{ then}$$

$$events\_sim = 1.0;$$

$$\textbf{return } events\_sim;$$

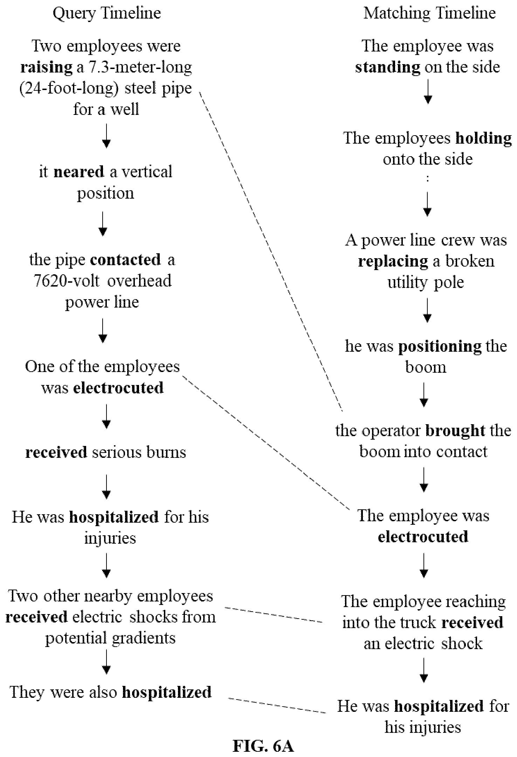

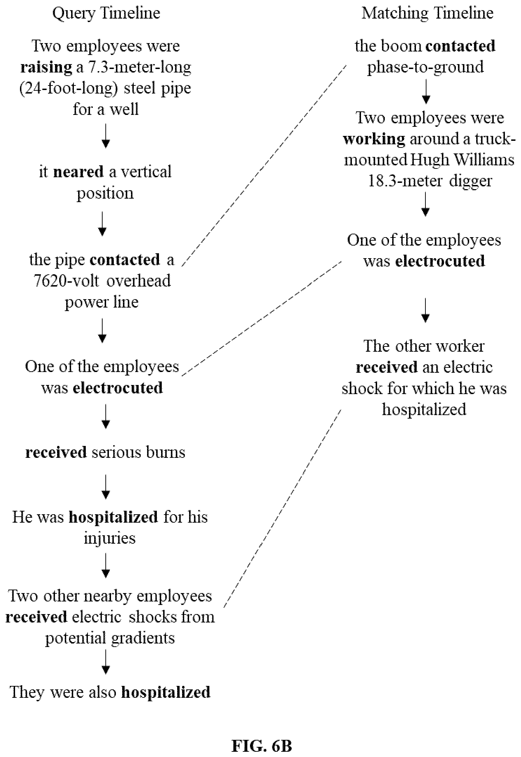

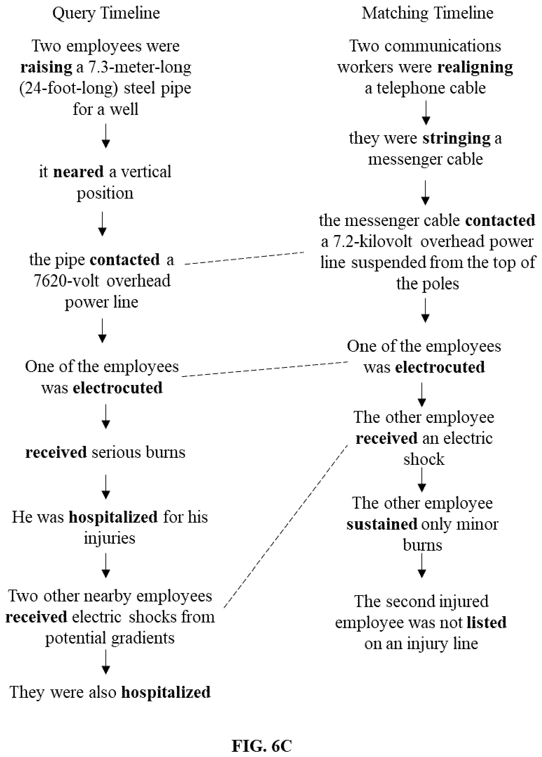

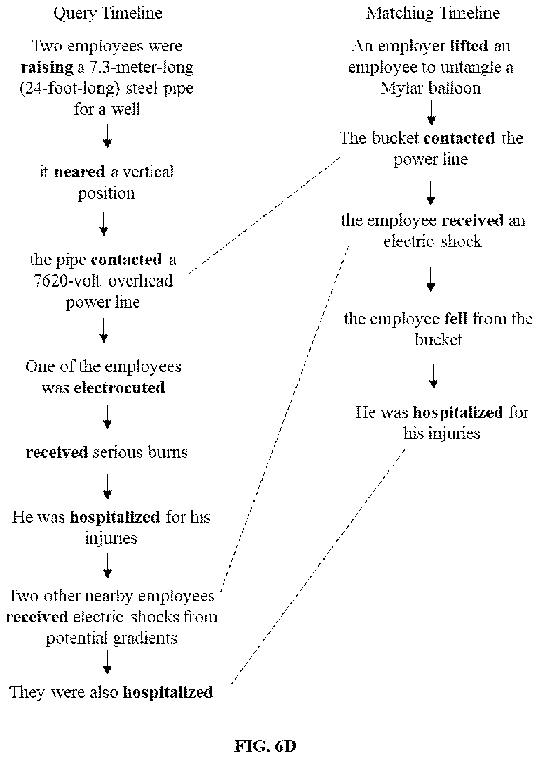

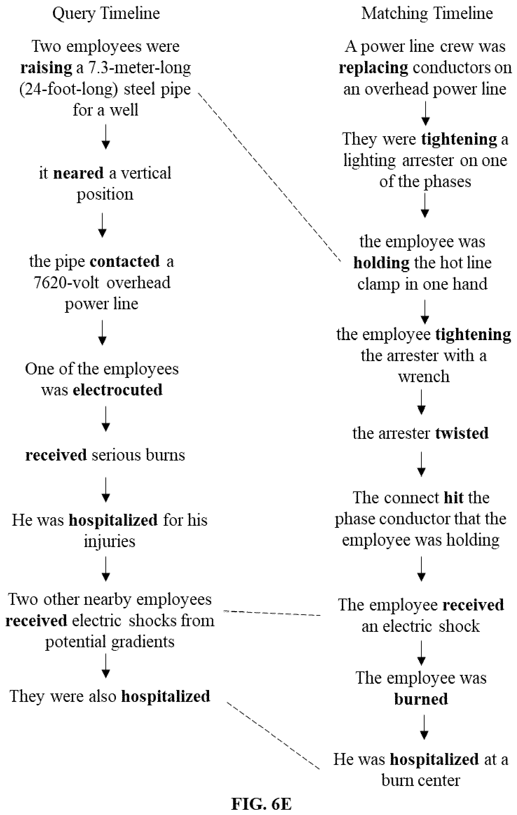

FIGS. 6A through 6E depict event timeline representations illustrating a working example of the method of the present disclosure using an incoming query incident and a plurality of matching events, in accordance with an embodiment of the present disclosure. For example, an incoming query incident (also referred as query incident) is received. Text of the query incident is 'Two employees were raising a 7.3-meter-long (24-foot-long) steel pipe for a well. As it neared a vertical position the pipe contacted a 7620-volt overhead power line. One of the employees was electrocuted and the other received an electric shock and serious burns. He was hospitalized for his injuries. Two other nearby employees received electric shocks from potential gradients in the wet earth. They were also hospitalized.' Further, a ranked list of top 5 matching incidents with respect to the incoming query incident is obtained from a repository of incident reports. The text of each of the top 5 matching incidents is provided below:

Matching incident 1 text: *A power line crew was replacing a broken utility pole. One of the employees on the crew was standing on the side of the digger derrick holding onto the side of the truck with both hands. A second employee was reaching into the cab of the truck with his right knee touching the running board. The ground was wet from a rain and ice storm. As he was positioning the boom of the derrick the operator brought the boom into contact with a 13.2-kilovolt overhead power line. The employee at the side of the truck was electrocuted. The employee reaching into the truck received an electric shock and burns on his knee and foot. He was hospitalized for his injuries.'*

Matching incident 2 text: *'Two employees were working around a truck mounted Hugh Williams 18.3-meter digger when the boom contacted a 7200-volt (phase-to-ground) overhead power line. One of the employees was electrocuted. The other worker received an electric shock for which he was hospitalized.'*

Matching incident 3 text: *'Two communications workers were realigning a telephone cable. As they were stringing a messenger cable for the telephone line between two poles the messenger cable contacted a 7.2-kilovolt overhead power line suspended from the top of the poles. One of the employees was electrocuted. The other employee received an electric shock and sustained only minor burns. (The second injured employee was not listed on an injury line on the original form.)'*

Matching incident 4 text: *'An employer lifted an employee in the bucket of a backhoe to untangle a Mylar balloon from an overhead power line. The bucket contacted the power line. The employee received an electric shock and fell from the bucket to the ground 3 meters below. He was hospitalized for his injuries.'*

Matching incident 5 text: *A power line crew was replacing conductors on an overhead power line. Two power line workers on the crew were in the elevated bucket of an aerial lift. They were tightening a lighting arrester on one of the phases. One of the employees was holding the hot line clamp in one hand and tightening the arrester with a wrench in the other hand. The arrester twisted and the connector to the fusible disconnect hit the phase conductor that the employee was holding. The employee received an electric shock and was burned. He was hospitalized at a burn center for severe burns to both hands.'*

As can be seen in FIGS. 6A through 6E, similarity between the query incident and the top most matching incident is identified based on the event timeline representations.

Referring to steps of FIG. 3 of the present disclosure, at step 208, the one or more hardware processors 104 are configured to dynamically update the system database by storing the timeline representation and corresponding similarity measure of the plurality of events comprised in the plurality of sentences of the one or more incident reports and the incoming query incident report. In an embodiment, based on the similarity analysis in incident reports using event timeline representations, similar incident reports from a repository of incident reports are identified. The identified similar incident reports can help in identifying root causes, prevent re-occurrence and devise best practices from the lessons learnt to curb incidents and better post-incident remedial measures.

**Experimental Results:**

Datasets: In the present disclosure, performance of the method of the present disclosure is evaluated on two real life datasets. The datasets used in the method of present disclosure comprises aviation and construction incidents. For aviation dataset, summaries of aircraft incidents from the known in the art Skybrary repository (e.g., refer (https://www.skybrary.aero/index.php/Category:Accidents_and_Incidents) is crawled for multiple years, leading to a total of 1225 incidents. For construction, the dataset of 1863 Occupational Safety and Health Administration (OSHA) incident report summaries are used. In an embodiment, certain incidents as are selected as the incoming query incidents from these datasets and removed from rest of the corpus used for finding similar incidents. Considering the wide variety of incidents, the incoming query incidents are groped based on a common incident type. For aviation, 4subsets of 10 queries each relating to waterbody crashes, object hits/strikes, equipment malfunctions and flight path excursions are collected. Similarly, for construction 4 subsets of 10 queries each relating to electrocution, worker falls, asphyxiation and vehicle related accidents are collected.

Evaluation: To validate this for incidents in the above datasets, the present disclosure first extracts the event timeline representations. In the present disclosure, the index search and a timeline similarity based matching between the query incidents and the corpus incidents is executed and a list of 5 best matching incidents with respect to a query incident is obtained. To obtain gold standard annotations for incident similarity, a Likert-scale based grading exercise of the 5 best incidents is set up for each of the 40 queries in the two datasets. As part of the grading exercise, each of the 5 result timelines for a query timeline is required to be annotated on a scale of 0 to 3, where 0 indicates no similarity and 3 indicates very high similarity.

In the present disclosure, a Normalized Discounted Cumulative Gain (NDCG) over the scores of the 5 results for each query is computed and an average over the scores for queries in each incident type is reported as shown in Table 3. Table 3 provides evaluation data for similarity analysis based on event timeline representations.

Table 3

| | Similarity Scores | |
|---|---|---|
| | **LCS (Baseline)** | **The method of present disclosure** |
| **Aviation** | | |
| Water body Crashes | **0.54** | **0.54** |
| Object strikes | 0.53 | **0.56** |
| Equipment Faults | 0.58 | **0.60** |
| Flight Path excursion | 0.65 | **0.70** |
| **Construction** | | |
| Electrocution | 0.63 | **0.65** |
| Worker Falls | 0.53 | **0.75** |
| Asphyxiation | **0.34** | **0.34** |
| Vehicle related | 0.61 | **0.69** |

As a baseline, the method of the present disclosure is compared against a conventional approach which uses the exact match based Longest Common Subsequence(LCS) algorithm over the index search results. Further, the method of the present disclosure is not compared with any supervised baseline as no labelled training data on incident similarity is available. It can be observed from Table 1, that approximate nature of the method of present disclosure which enables embeddings based similarity, surpasses the performance of the state of the art exact matching based LCS algorithm in most of the incident types in both datasets.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

**Claims**

1.  A processor implemented method, comprising:

    receiving (202), via one or more hardware processors, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation;
    generating (204), via the one or more hardware processors, a timeline representation of the plurality of events comprised in the plurality of sentences of (i) the one or more incident reports and (ii) the incoming query incident report using a temporal relation identification technique, wherein the temporal relation identification technique comprising:

        classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and
        determining, a time order of the plurality of events in each of the plurality of time ordered sentences based on one or more temporal markers;

determining (206), via the one or more hardware processors, a similarity measure between the incoming query incident report and the one or more incident reports from the repository of incident reports stored in the system database using a similarity identification approach that utilizes the generated timeline representation of the plurality of events, wherein the similarity identification approach comprising:

obtaining, a first set of incidents reports from the one or more incident reports from the repository of incident reports stored in the system database, wherein the first set of incident reports having a textual content based similarity with the incoming query incident report based on an indexing method;

identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report;

determining, using an approximate matching technique, a similarity score for each component of the set of similar events between each of the first set of incident reports and the incoming query incident report; and

identifying, based on the similarity score, a longest sequence of similar components of the set of similar events between each of the first set of incident reports and the incoming query incident report; and

dynamically updating (208), via the one or more hardware processors, the system database by storing the timeline representation and corresponding similarity measure of the plurality of events comprised in the plurality of sentences of the one or more incident reports and the incoming query incident report.

2. The processor implemented method as claimed in claim 1, wherein the incoming query incident report is different from the one or more incident reports from the repository of incident reports stored in the system database.

3. The processor implemented method as claimed in claim 1, wherein the timeline representation is indicative of chronological ordering of the plurality of events.

4. The processor implemented method as claimed in claim 1, wherein the set of similar events is a subset of the timeline representation of a plurality of events comprised in each of the first set of incident reports and a plurality of events comprised in the incoming query incident report.

5. The processor implemented method as claimed in claim 1, wherein the one or more similarity parameters include one or more linguistic constraints, one or more word embedding constraints, and one or more sentence representations.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive, (i) one or more incident reports from a repository of incident reports stored in a system database and (ii) an incoming query incident report pertaining to one or more industrial domains, wherein each of the one or more incident report comprises a plurality of sentences, and wherein each of the plurality of sentences comprises a plurality of events indicative of a disruption in a service operation;

generate, a timeline representation of the plurality of events comprised in the plurality of sentences of (i) the one or more incident reports and (ii) the incoming query incident report using a temporal relation identification technique, wherein the temporal relation identification technique comprising:

classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and

determining, a time order of the plurality of events in each of the plurality of time ordered sentences based on one or more temporal markers;

determine, a similarity measure between the incoming query incident report and the one or more incident reports from the repository of incident reports stored in the system database using a similarity identification approach that utilizes the generated timeline representation of the plurality of events, wherein the similarity identification approach comprising:

obtaining, a first set of incidents reports from the one or more incident reports from the repository of incident reports stored in the system database, wherein the first set of incident reports having a textual content based similarity with the incoming query incident report based on an indexing method;

identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report;

determining, using an approximate matching technique, a similarity score for each component of the set of similar events between each of the first set of incident reports and the incoming query incident report; and

identifying, based on the similarity score, a longest sequence of similar components of the set of similar events between each of the first set of incident reports and the incoming query incident report; and

dynamically update, the system database by storing the timeline representation and corresponding similarity measure of the plurality of events comprised in the plurality of sentences of the one or more incident reports and the incoming query incident report.

7. The system as claimed in claim 6, wherein the incoming query incident report is different from the one or more incident reports from the repository of incident reports stored in the system database.

8. The system as claimed in claim 6, wherein the timeline representation is indicative of chronological ordering of the plurality of events.

9. The system as claimed in claim 6, wherein the set of similar events is a subset of the timeline representation of a plurality of events comprised in each of the first set of incident reports and a plurality of events comprised in the incoming query incident report.

10. The system as claimed in claim 6, wherein the one or more similarity parameters include one or more linguistic constraints, one or more word embedding constraints, and one or more sentence representations.

11. One or more non-transitory computer readable mediums comprising one or more instructions which when executed by one or more hardware processors cause:

receiving, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation;

generating, a timeline representation of the plurality of events comprised in the plurality of sentences of (i) the one or more incident reports and (ii) the incoming query incident report using a temporal relation identification technique, wherein the temporal relation identification technique comprising:

classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and

determining, a time order of the plurality of events in each of the plurality of time ordered sentences based on one or more temporal markers;

determining, a similarity measure between the incoming query incident report and the one or more incident reports from the repository of incident reports stored in the system database using a similarity identification approach that utilizes the generated timeline representation of the plurality of events, wherein the similarity identification approach comprising:

obtaining, a first set of incidents reports from the one or more incident reports from the repository of incident reports stored in the system database, wherein the first set of incident reports having a textual content based similarity with the incoming query incident report based on an indexing method;

identifying a set of similar events between each of the first set of incident reports and the incoming query incident report by applying at least one of (i) a dynamic programming based approach that is modified to not enforce a verbatim match amongst the plurality of events and (ii) one or more similarity parameters on the timeline representation of a plurality of events comprised in each of the first set of incident reports and a plurality of events comprised in the incoming query incident report;

determining, using an approximate matching technique, a similarity score for each component of the set of similar events between each of the first set of incident reports and the incoming query incident report; and

identifying, based on the similarity score, a longest sequence of similar components of the set of similar events between each of the first set of incident reports and the incoming query incident report; and

dynamically updating (208), the system database by storing the timeline representation and corresponding similarity measure of the plurality of events comprised in the plurality of sentences of the one or more incident reports and the incoming query incident report.

12. The non-transitory computer readable mediums as claimed in claim 11, wherein the incoming query incident report is different from the one or more incident reports from the repository of incident reports stored in the system database.

13. The non-transitory computer readable mediums as claimed in claim 11, wherein the timeline representation is indicative of chronological ordering of the plurality of events.

14. The non-transitory computer readable mediums as claimed in claim 11, wherein the set of similar events is a subset of the timeline representation of a plurality of events comprised in each of the first set of incident reports and a plurality of events comprised in the incoming query incident report.

15. The non-transitory computer readable mediums as claimed in claim 1, wherein the one or more similarity parameters include one or more linguistic constraints, one or more word embedding constraints, and one or more sentence representations.

SYSTEM
100

MEMORY
102

DATABASE
108

HARDWARE
PROCESSOR(S)
104

INTERFACE(S)
106

**FIG. 1**

Receiving, via one or more hardware processors, (i) one or more incident reports from a repository of incident reports stored in a system database and (ii) an incoming query incident report pertaining to one or more industrial domains, wherein each of the one or more incident reports comprises a plurality of sentences, and wherein each of the plurality of sentences comprises a plurality of events indicative of a disruption in a service operation

202

Generating, a timeline representation of the plurality of events comprised in the plurality of sentences of (i) the one or more incident reports and (ii) the incoming query incident report using a temporal relation identification technique, wherein the temporal relation identification technique comprising: classifying, using a deep learning based neural network classifier, each of the plurality of sentences in the one or more incident reports into one of a set of predefined categories to obtain a plurality of time ordered sentences, wherein the set of predefined categories includes a background, an incident, and a consequence; and determining, a time order of the plurality of events in each of the plurality of time ordered sentences based on one or more temporal markers

204

Determining, a similarity measure between the incoming query incident report and the one or more incident reports from the repository of incident reports stored in the system database using a similarity identification approach that utilizes the generated timeline representation of the plurality of events

206

dynamically updating, the system database by storing the timeline representation and corresponding similarity measure of the plurality of events comprised in the plurality of sentences of the one or more incident reports and the incoming query incident report

208

**FIG. 2**

200

```
┌─────────────────────────────────────────────────────────────┐
│                   Output Softmax Layer                       │
└─────────────────────────────────────────────────────────────┘
                              ⇑
┌─────────────────────────────────────────────────────────────┐
│                      Hidden Layer                            │
└─────────────────────────────────────────────────────────────┘
                              ⇑
┌─────────────────────────────────────────────────────────────┐
│                   Concatenation layer                        │
└─────────────────────────────────────────────────────────────┘
              ⇑                                ⇑
┌──────────────────────────┐      ┌──────────────────────────┐
│ Sentence Representation   │      │ Optimal domain specific   │
│ layer (BERT               │      │ features derived from     │
│ Sentence Representation)  │      │ input sentences           │
└──────────────────────────┘      └──────────────────────────┘
          ⇑                                    ⇑
┌──────────────┐                               │
│    BERT      │ ⟹                             │
└──────────────┘                               │
┌─────────────────────────────────────────────────────────────┐
│                     Input Sentence                           │
└─────────────────────────────────────────────────────────────┘
```

**FIG. 3**

After **hovering** at 2-3 places, the helicopter **climbed** to a height of 80-100 feet.

[AFTER hovering, climbing]
~ [AFTER event1, event2]
~ [event1 BEFORE event2]

Hence, [hovering BEFORE climbing]

**FIG. 4**

........

↓

A power line crew was **replacing** a broken utility pole

↓

he was **positioning** the boom

↓

the operator **brought** the boom into contact

↓

The employee was **electrocuted**

↓

The employee reaching into the truck **received** an electric shock

↓

He was **hospitalized** for his injuries

**FIG. 5**

Query Timeline

Matching Timeline

Two employees were **raising** a 7.3-meter-long (24-foot-long) steel pipe for a well

↓

it **neared** a vertical position

↓

the pipe **contacted** a 7620-volt overhead power line

↓

One of the employees was **electrocuted**

↓

**received** serious burns

↓

He was **hospitalized** for his injuries

↓

Two other nearby employees **received** electric shocks from potential gradients

↓

They were also **hospitalized**

The employee was **standing** on the side

↓

The employees **holding** onto the side

⋮

↓

A power line crew was **replacing** a broken utility pole

↓

he was **positioning** the boom

↓

the operator **brought** the boom into contact

↓

The employee was **electrocuted**

↓

The employee reaching into the truck **received** an electric shock

↓

He was **hospitalized** for his injuries

**FIG. 6A**

Query Timeline

Matching Timeline

Two employees were **raising** a 7.3-meter-long (24-foot-long) steel pipe for a well

↓

it **neared** a vertical position

↓

the pipe **contacted** a 7620-volt overhead power line

↓

One of the employees was **electrocuted**

↓

**received** serious burns

↓

He was **hospitalized** for his injuries

↓

Two other nearby employees **received** electric shocks from potential gradients

↓

They were also **hospitalized**

the boom **contacted** phase-to-ground

↓

Two employees were **working** around a truck-mounted Hugh Williams 18.3-meter digger

↓

One of the employees was **electrocuted**

↓

The other worker **received** an electric shock for which he was hospitalized

**FIG. 6B**

Query Timeline

Matching Timeline

Two employees were **raising** a 7.3-meter-long (24-foot-long) steel pipe for a well

↓

it **neared** a vertical position

↓

the pipe **contacted** a 7620-volt overhead power line

↓

One of the employees was **electrocuted**

↓

**received** serious burns

↓

He was **hospitalized** for his injuries

↓

Two other nearby employees **received** electric shocks from potential gradients

↓

They were also **hospitalized**

Two communications workers were **realigning** a telephone cable

↓

they were **stringing** a messenger cable

↓

the messenger cable **contacted** a 7.2-kilovolt overhead power line suspended from the top of the poles

↓

One of the employees was **electrocuted**

↓

The other employee **received** an electric shock

↓

The other employee **sustained** only minor burns

↓

The second injured employee was not **listed** on an injury line

**FIG. 6C**

Query Timeline

Matching Timeline

Two employees were
**raising** a 7.3-meter-long
(24-foot-long) steel pipe
for a well

↓

it **neared** a vertical
position

↓

the pipe **contacted** a
7620-volt overhead
power line

↓

One of the employees
was **electrocuted**

↓

**received** serious burns

↓

He was **hospitalized** for his
injuries

↓

Two other nearby employees
**received** electric shocks from
potential gradients

↓

They were also **hospitalized**

An employer **lifted** an
employee to untangle a
Mylar balloon

↓

The bucket **contacted** the
power line

↓

the employee **received** an
electric shock

↓

the employee **fell** from the
bucket

↓

He was **hospitalized** for
his injuries

**FIG. 6D**

Query Timeline

Two employees were **raising** a 7.3-meter-long (24-foot-long) steel pipe for a well

↓

it **neared** a vertical position

↓

the pipe **contacted** a 7620-volt overhead power line

↓

One of the employees was **electrocuted**

↓

**received** serious burns

↓

He was **hospitalized** for his injuries

↓

Two other nearby employees **received** electric shocks from potential gradients

↓

They were also **hospitalized**

Matching Timeline

A power line crew was **replacing** conductors on an overhead power line

↓

They were **tightening** a lighting arrester on one of the phases

↓

the employee was **holding** the hot line clamp in one hand

↓

the employee **tightening** the arrester with a wrench

↓

the arrester **twisted**

↓

The connect **hit** the phase conductor that the employee was holding

↓

The employee **received** an electric shock

↓

The employee was **burned**

↓

He was **hospitalized** at a burn center

**FIG. 6E**

Europäisches
Patentamt

European
Patent Office

Office européen
des brevets

# EUROPEAN SEARCH REPORT

Application Number

**EP 23 15 8165**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 269 368 B1 (DIAMOND THEODORE G [US]) 31 July 2001 (2001-07-31) * abstract * * column 3, lines 61-67 * * 1.3 GUI Interaction and Information Retrieval Overview; column 7 – column 8 * * 2.0 Document Processing; column 8 – column 10 * * column 11, lines 44-63 * * column 12, lines 52-57 * * figures 1-3 * ----- | 1-15 | INV. G06F16/383 G06F16/35 |
| X | US 2010/235164 A1 (TODHUNTER JAMES [US] ET AL) 16 September 2010 (2010-09-16) * paragraphs [0016], [0017], [0037] – [0043], [0059], [0060], [0064], [0068], [0073], [0074] * * figures 1, 2, 6 * ----- | 1-15 | |
| | | | TECHNICAL FIELDS SEARCHED (IPC) G06F |

The present search report has been drawn up for all claims

| Place of search | Date of completion of the search | Examiner |
|---|---|---|
| The Hague | 12 July 2023 | Martínez Espuche, F |

EPO FORM 1503 03.82 (P04C01)

## ANNEX TO THE EUROPEAN SEARCH REPORT
## ON EUROPEAN PATENT APPLICATION NO.

EP 23 15 8165

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2023

| Patent document cited in search report | | Publication date | Patent family member(s) | Publication date |
|---|---|---|---|---|
| US 6269368 | B1 | 31-07-2001 | NONE | |
| US 2010235164 | A1 | 16-09-2010 | CN 102439590 A | 02-05-2012 |
| | | | CN 102439595 A | 02-05-2012 |
| | | | EP 2406731 A2 | 18-01-2012 |
| | | | EP 2406738 A2 | 18-01-2012 |
| | | | JP 2012520527 A | 06-09-2012 |
| | | | JP 2012520528 A | 06-09-2012 |
| | | | KR 20110134909 A | 15-12-2011 |
| | | | KR 20120009446 A | 31-01-2012 |
| | | | US 2010235164 A1 | 16-09-2010 |
| | | | US 2010235165 A1 | 16-09-2010 |
| | | | WO 2010105214 A2 | 16-09-2010 |
| | | | WO 2010105216 A2 | 16-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221015893